# EUROPÄISCHE PATENTSCHRIFT

(11) **EP 1 658 208 B1**
(45) Veröffentlichungstag und Bekanntmachung des Hinweises auf die Patenterteilung: **29.11.2006**
(21) Anmeldenummer: 04763523.0
(22) Anmeldetag: 27.07.2004
(51) Int. Cl.: B60R 22/46

(54) **GURTAUFROLLER MIT ZWEI STRAFFVORRICHTUNGEN**
BELT RETRACTOR HAVING TWO TAUTENING DEVICES
ENROULEUR DE CEINTURE POURVU DE DEUX DISPOSITIFS TENDEURS

(30) Priorität: 26.08.2003 DE 10339161
(43) Veröffentlichungstag der Anmeldung: 24.05.2006
(73) Patentinhaber: AUTOLIV DEVELOPMENT AB, 447 83 Vargarda (SE)
(72) Erfinder: LUCHT, Andreas, 25358 Horst (DE); MATZEN, Frank, 22459 Hamburg (DE); ZIEL, Erik, 25451 Quickborn (DE); WITTENBERG, Geert, Helge, 22848 Norderstedt (DE)
(74) Vertreter: Müller, Karl-Ernst
(86) Internationale Anmeldenummer: PCT/EP2004/008387
(87) Internationale Veröffentlichungsnummer: WO 2005/021339

(56) Entgegenhaltungen:
- WO-A-01/85495
- DE-A- 4 322 798
- DE-A- 10 025 031
- DE-A- 10 204 477
- DE-C- 10 059 227
- PATENT ABSTRACTS OF JAPAN Bd. 2003, Nr. 03, 5. Mai 2003 (2003-05-05) -& JP 2002 326558 A (TAKATA CORP), 12. November 2002 (2002-11-12) in der Anmeldung erwähnt

## Beschreibung

Die Erfindung betrifft einen selbstsperrenden Gurtaufroller mit einer insbesondere bei einem Unfall auslösbaren Notfallstraffeinrichtung für die Gurtwelle und mit einer ebenfalls an die Gurtwelle angeschlossenen zweiten, als reversibel arbeitende Vorstraffeinrichtung ausgebildeten Straffeinrichtung, wobei eine Einrichtung zur Beendigung des von der Vorstraffeinrichtung bewirkten Straffvorganges vorgesehen ist, wenn die Notfallstraffeinrichtung ausgelöst wird.

Ein Gurtaufroller mit den vorgenannten Merkmalen ist in der JP 2002-326558 beschrieben. Dieser Gurtaufroller weist zwei Straffeinrichtungen auf, und zwar zunächst eine reversibel arbeitende Vorstraffeinrichtung mit einem Elektromotor als Antrieb. Diese Vorstraffeinrichtung soll in normalen Fahrsituationen bis hin zum Auftreten von stärkeren Beschleunigungen bzw. Verzögerungen des Fahrzeugs noch ohne das Auftreten eines Unfalls jeweils den angelegten Sicherheitsgurt straff halten und nach Möglichkeit das Entstehen einer Gurtlose verhindern. Kommt es zu einem Unfall, wird eine weitere, als pyrotechnisch angetriebene Straffeinrichtung ausgebildete Notfallstraffeinrichtung ausgelöst, welche die Gurtwelle mit entsprechender Kraft und Drehgeschwindigkeit in Aufwickelrichtung dreht und dabei eine bestehende Gurtlose bis hin zu einem aktiven Hineinziehen des Insassen in den Sitz beseitigt.

Mit einer derartigen Ausgestaltung eines gattungsgemäßen Gurtaufrollers ergibt sich ein Abstimmungsproblem hinsichtlich der beiden Gurtstraffeinrichtungen insoweit, als die pyrotechnische Notfallstraffeinrichtung ausgelöst werden kann, wenn die elektromotorisch arbeitende Vorstraffeinrichtung noch wirksam ist, und dies kann dazu führen, daß sich die beiden Strafferantriebe gegenseitig behindern, so daß es nicht zu einer optimalen Ausnutzung der installierten Straffenergie kommt. Zur Lösung dieses Problems ist in der JP 2002-326558 bereits eine signalgesteuerte Aufhebung der Antriebsverbindung zwischen dem Elektromotor und der Gurtwelle vorgesehen.

Mit dieser Lösung ist der Nachteil verbunden, daß die Steuerungstechnik und die Kupplungskonstruktion entsprechend aufwendig sind. Zum einen muß der Zeitpunkt der Auslösung der pyrotechnischen Notfallstraffeinrichtung erfaßt und es muß ein entsprechendes Signal verarbeitet werden; da die Aufhebung der Antriebsverbindung zwischen der Gurtwelle und der Vorstraffeinrichtung in einen laufenden Straffvorgang hinein mit entsprechender Kraftübertragung geschieht, ist die bei dem in der gattungsgemäßen JP-Schrift beschriebenen Gurtstraffer ausgebildete Kupplung entsprechend kompliziert aufgebaut.

Der Erfindung liegt daher die Aufgabe zugrunde, bei einem selbstsperrenden Gurtaufroller mit den gattungsgemäßen Merkmalen eine Überlagerung der Antriebswirkung der beiden Straffeinrichtungen in einer einfachen Weise auszuschließen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Notfallstraffeinrichtung mit einer größeren Drehgeschwindigkeit ausgelegt ist als die von der Vorstraffeinrichtung erzeugte Drehgeschwindigkeit und die Kupplung zwischen Vorstraffeinrichtung und Gurtwelle derart ausgebildet ist, daß nach Auslösung der Notfallstraffeinrichtung die dadurch in eine schnellere Drehung versetzte Gurtwelle die Kupplung in deren Freigabestellung zurückführt und so die Kupplungsverbindung zwischen Gurtwelle und Vorstraffeinrichtung aufhebt. Mit der Erfindung ist der Vorteil verbunden, daß keine besondere Steuermechanik zur Abschaltung der Vorstraffeinrichtung vorgesehen sein muß, weil die bei Auslösung der Notfallstraffeinrichtung zwangsläufig eintretende schnelle Drehbeschleunigung der Gurtwelle für die Aufhebung der Kupplungsverbindung zwischen Gurtwelle und Vorstraffeinrichtung sorgt. Insofern sind zusätzliche Maßnahmen nicht erforderlich.

Gemäß einer Ausführungsform der Erfindung ist vorgesehen, daß die Kupplung zwischen Gurtwelle und Vorstraffeinrichtung aus einer fest mit der Gurtwelle verbundenen, innenverzahnten Kupplungsglocke und aus einer an dem Abtriebsrad der Vorstraffeinrichtung angeordnet und zum Eingriff in die Innenverzahnung der Kupplungsglocke aussteuerbaren Zahnscheibe besteht, wobei die Verzahnungen von Kupplungsglocke und Zahnscheibe derart aufeinander abgestimmt sind, daß bei stillstehender oder sich langsamer als das Abtriebsrad drehender Kupplungsglocke eine Verriegelung in Aufwickelrichtung erfolgt und bei sich mit höherer Drehgeschwindigkeit als das Abtriebsrad drehender Kupplungsglocke die Zahnflanken der Innenverzahnung der Kupplungsglocke die Zahnscheibe mit den zugeordneten Zahnflanken außer Eingriff drängen. Eine derartige Kupplungsverbindung ist ohne Berücksichtigung einer besonderen Verzahnungsgeometrie bereits aus der DE 100 59 227 C1 bekannt. Entsprechend ist in einer Weiterbildung der Erfindung ebenfalls vorgesehen, daß die Zahnscheibe in einer in dem Abtriebsrad ausgebildeten Ausnehmung zwischen einer innerhalb der Kontur des Abtriebsrades gelegenen Freigabestellung und einer über den Umfang des Abtriebsrades hervorstehenden Verriegelungsstellung verschiebbar angeordnet und von einem Reibelement in der Freigabestellung gehalten ist.

Nach Ausführungsbeispielen der Erfindung können in einer aus der gattungsbildenden Schrift bekannten Weise die Vorstraffeinrichtung mit einem Elektromotor und die Notfallstraffeinrichtung mit einem pyrotechnischen Antrieb ausgerüstet sein.

In der Zeichnung ist ein Ausführungsbeispiel der Erfindung wiedergegeben, welches nachstehend beschrieben ist. Es zeigen:
- Fig. 1: einen Gurtaufroller mit zwei Straffeinrichtungen in einer geschnittenen Seitenansicht,
- Fig. 2: die Kupplungsverbindung zwischen Vorstraffeinrichtung und Gurtwelle in einer vergrößerten Einzeldarstellung im Schnitt, wobei die Verhältnisse beim Vorstraffen kenntlich gemacht sind,
- Fig. 3: den Gegenstand der Figur 2, wobei die Verhältnisse beim Notfallstraffen kenntlich gemacht sind.

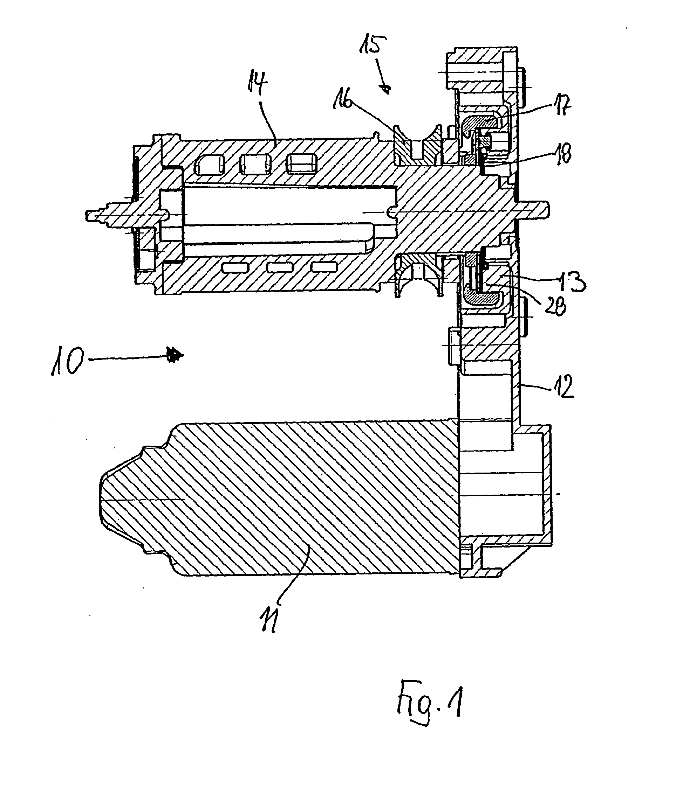

Der aus Figur 1 ersichtliche Gurtaufroller 10 besteht in einer vereinfachten Darstellung aus der Anordnung einer Gurtwelle 14 und einer Vorstraffeinrichtung in Form eines Elektromotors 11 als Antrieb dafür; die Gurtwellenanordnung und der Elektromotor 11 sind über ein Verbindungsgehäuse 12 miteinander verbunden, welches als Getriebegehäuse ausgebildet ist derart, daß die Antriebsbewegung des Elektromotors 11 beispielsweise über ein in dem Verbindungsgehäuse 12 angeordnetes, im einzelnen nicht dargestelltes Getriebe in eine Drehung eines Abtriebsrades 13 umgesetzt werden kann, welches Abtriebsrad 13 in dem Verbindungsgehäuse 12 gelagert ist.

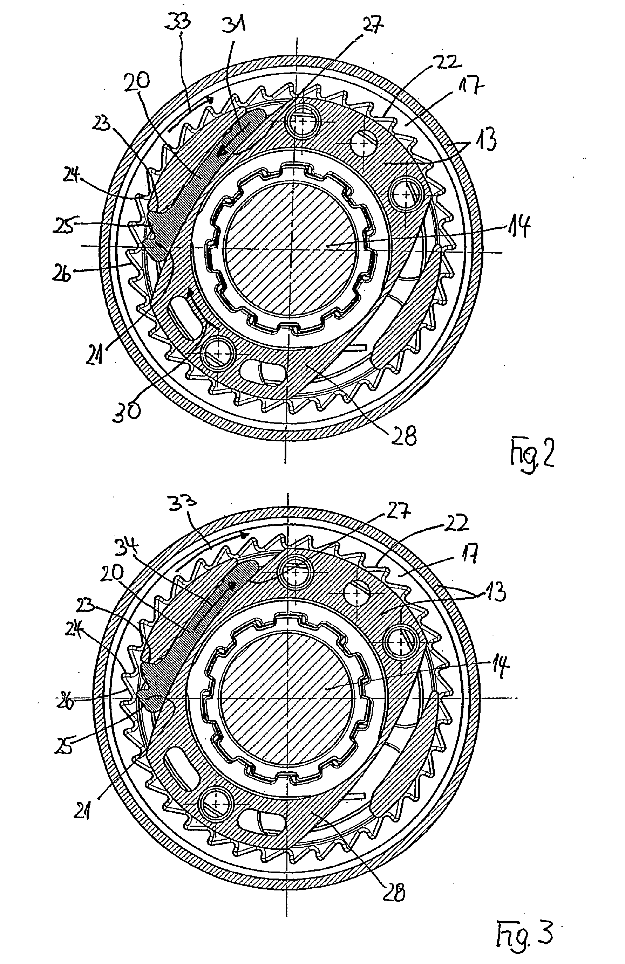

Auf die Gurtwelle 14 wirkt eine vorzugsweise pyrotechnisch ausgebildete Notfallstraffeinrichtung 15, die als an sich bekannter Kugelstraffer ausgebildet sein kann; mit 16 ist ein Strafferrad als Bestandteil einer bekannten Kugelstraffeinrichtung bezeichnet, welches fest auf der Gurtwelle 14 sitzt. Ebenfalls fest mit der Gurtwelle 14 ist eine innenverzahnte Kupplungsglocke 17 verbunden, die in das Abtriebsrad hineinreicht und sich mit einem inneren Ansatz 28 des Abtriebsrades 13 derart überlagert, daß eine noch zu beschreibende Kupplung ausgebildet werden kann. Diese Kupplung ist im einzelnen aus den Figuren 2 und 3 ersichtlich.

In den Figuren 2 und 3 ist die Kupplungsverbindung zwischen dem Abtriebsrad 13 und der Kupplungsglocke 17 dargestellt. Hierzu ist in einer in dem Abtriebsrad 13 ausgebildeten Ausnehmung 19 eine Zahnscheibe 20 mit einer an dieser ausgebildeten Außenverzahnung 21 verschiebbar angeordnet. In einer Stellung, in welcher die Zahnscheibe 20 gegenüber der in den Figuren 2 und 3 dargestellten Lage derart nach außen verschoben ist, daß die Außenverzahnung 21 über den Umfang eines inneren Ansatzes 28 des Abtriebsrades 13 hervorsteht, gelangt die Außenverzahnung 21 der Zahnscheibe 20 in Eingriff mit der Innenverzahnung 22 der Kupplungsglocke 17, wodurch die Kupplungsverbindung zwischen dem Abtriebsrad 13 der Vorstraffeinrichtung und der Gurtwelle 14 hergestellt ist. Zur Einleitung der Verschiebebewegung der Zahnscheibe 20 nach außen aus der in den Figuren 2 und 3 dargestellten Position ist ein in Figur 1 mit 18 bezeichnetes Reibelement vorgesehen, welches bei anfänglicher Drehung des Abtriebsrades 13 zunächst die Zahnscheibe 20 festhält, so daß aufgrund der anfänglichen Relativbewegung zwischen Abtriebsrad 13 und Reibelement 18 die Zahnscheibe 20 längs der Führungsbahn 27 nach außen verschoben wird, wie dies in der genannten DE 100 59 227 C1 beschrieben ist.

Unter Bezugnahme auf Figur 2 wird nachstehend der Bewegungsablauf bei Ansprechen des Elektromotors 11 beschrieben, der zunächst das Abtriebsrad 13 in Richtung des Pfeils 30, also im Uhrzeigersinn dreht. Da die Zahnscheibe 20 in der Ausnehmung 19 des Abtriebsrades 13 aufgrund der Wirkung des Reibelements 18 zunächst einmal festgehalten wird, kommt es zu einer Ausschubbewegung der Zahnscheibe 20 längs der Führungsbahn 27 in Richtung des Pfeils 31, so daß die Außenverzahnung 21 in Eingriff mit der Innenverzahnung 22 der Kupplungsglocke 17 gelangt. Dabei sind die in der Drehrichtung (Pfeil 30) des Abtriebsrades 13 orientierten Zahnflanken 23 der Außenverzahnung 21 und 24 der Innenverzahnung 22 in etwa radial derart ausgerichtet, daß ein fester Verzahnungseingriff gegeben ist. Dies führt zu einer Mitnahme der Kupplungsglocke 17 in Richtung des Pfeils 32 (im Uhrzeigersinn), so daß aufgrund der festen Verbindung der Kupplungsglocke 17 mit der Gurtwelle 14 die Gurtwelle 14 ebenfalls in Straffrichtung gedreht wird.

Kommt es nun während eines bestehenden Verzahnungseingriffs von Zahnscheibe 20 und Kupplungsglocke 17 zu einer Auslösung der pyrotechnischen Notfallsstraffeinrichtung 15, so wird die Kupplungsglocke 17 mit einer entsprechend größeren Drehbeschleunigung in Richtung des Pfeils 33 (im Uhrzeigersinn) gedreht, so daß die Kupplungsglocke 17 das sich drehende Abtriebsrad 13 überholt. Damit heben die Zahnflanken 23 und 24 voneinander ab, und es kommen nun die in einer entsprechenden Winkelanordnung ausgebildeten Zahnflanken 25 an der Außenverzahnung 21 sowie 26 an der Innenverzahnung 22 in Anlage, die bezüglich der Drehrichtung derart ausgerichtet sind, daß die Zahnscheibe 20 mit ihren an den Zahnflanken 26 der Innenverzahnung 22 aufgrund der langsameren Drehgeschwindigkeit des Abtriebsrades 13 ablaufenden Zahnflanken 25 in die Ausnehmung 19 des Abtriebsrades 13 hineinverschoben wird, so daß die Kupplungsverbindung zwischen Abtriebsrad 13 und Gurtwelle 14 aufgehoben ist. Da aufgrund des "Überholvorganges" der Kupplungsglocke 17 gegenüber dem Abtriebsrad 13 keine Kräfte mehr zwischen Abtriebsrad 13 und Kupplungsglocke 17 wirken, geschieht das Verschieben der Zahnscheibe 20 in deren Freigabestellung ohne eine Behinderung.

## Patentansprüche

1. Selbstsperrender Gurtaufroller (10) mit einer insbesondere bei einem Unfall auslösbaren Notfallstraffeinrichtung (15) für die Gurtwelle (14) und mit einer ebenfalls an die Gurtwelle (14) angeschlossenen zweiten, als reversibel arbeitende Vorstraffeinrichtung (11) ausgebildeten Straffeinrichtung, wobei eine Einrichtung zur Beendigung des von der Vorstraffeinrichtung (11) bewirkten Straffvorganges vorgesehen ist, wenn die Notfallstraffeinrichtung (15) ausgelöst wird, **dadurch gekennzeichnet, daß** die Notfallstraffeinrichtung (15) mit einer größeren Drehgeschwindigkeit ausgelegt ist als die von der Vorstraffeinrichtung (11) erzeugte Drehgeschwindigkeit und die Kupplung (13, 17, 20) zwischen Vorstraffeinrichtung (11) und Gurtwelle (14) derart ausgebildet ist, daß nach Auslösung der Notfallstraffeinrichtung (15) die dadurch in eine schnellere Drehung versetzte Gurtwelle (14) die Kupplung (13, 17, 20) in deren Freigabestellung zurückführt und so die Kupplungsverbindung zwischen Gurtwelle (14) und Vorstraffeinrichtung (11) aufhebt.

2. Gurtaufroller nach Anspruch 1, **dadurch gekennzeichnet, daß** die Kupplung zwischen Gurtwelle (14) und Vorstraffeinrichtung (11) aus einer fest mit der Gurtwelle (14) verbundenen, innenverzahnten Kupplungsglocke (17) und aus einer an dem Abtriebsrad (13) der Vorstraffeinrichtung (11) angeordneten und zum Eingriff in die Innenverzahnung (22) der Kupplungsglocke (17) aussteuerbaren Zahnscheibe (20) besteht, wobei die Verzahnungen (23, 24, 25, 26) von Kupplungsglocke (17) und Zahnscheibe (20) derart aufeinander abgestimmt sind, daß bei stillstehender oder sich langsamer als das Abtriebsrad (13) drehender Kupplungsglocke (17) eine Verriegelung in Aufwickelrichtung erfolgt und bei sich mit höherer Drehgeschwindigkeit als das Abtriebsrad (13) drehender Kupplungsglocke (17) die Zahnflanken (26) der Innenverzahnung (22) der Kupplungsglocke (17) die Zahnscheibe (20) mit den zugeordneten Zahnflanken (25) außer Eingriff drängen.

3. Gurtaufroller nach Anspruch 2, **dadurch gekennzeichnet, daß** die Zahnscheibe (20) in einer in dem Abtriebsrad (13) ausgebildeten Ausnehmung (19) zwischen einer innerhalb der Kontur des Abtriebsrades (13) gelegenen Freigabestellung und einer über den Umfang des Abtriebsrades (13) hervorstehenden Verriegelungsstellung verschiebbar angeordnet und von einem Reibelement (18) in der Freigabestellung gehalten ist.

4. Gurtaufroller nach einem der Ansprüche 1 bis 3, **dadurch gekennzeichnet, daß** die Vorstraffeinrichtung einen reversibel arbeitenden Elektromotor (11) als Antrieb aufweist.

5. Gurtaufroller nach einem der Ansprüche 1 bis 4, **dadurch gekennzeichnet, daß** die Notfallstraffeinrichtung (15) mit einem pyrotechnischen Antrieb versehen ist.

## Claims

1. Self-locking belt roller (10) with an emergency tensioning device (15) for the belt shaft (14) which can particularly be triggered in case of an accident and with a second tensioning device designed in the form of a reversibly-operating pretensioning device (11) which is also connected to the belt shaft (14), whereby a device is provided for ending the tensioning process effected by the pretensioning device (11) when the emergency tensioning device (15) is triggered, **characterised in that** the emergency tensioning device (15) is designed with a greater rotational speed than the rotational speed created by the pretensioning device (11), and the coupling (13, 17, 20) is formed between pretensioning device (11) and belt shaft (14) in such a way, that following triggering of emergency tensioning device (15), the belt shaft (14) which is thereby caused to rotate more rapidly leads coupling (13, 17, 20) back to its release position and therefore cancels the coupling connection between belt shaft (14) and pretensioning device (11).

2. Belt roller according to claim 1, **characterised in that** the coupling between belt shaft (14) and pretensioning device (11) consists of a coupling bell (17) connected in fixed fashion with belt shaft (14) and supplied with inner teeth, and of a toothed disc (20) located on the take-off wheel (13) of pretensioning device (11) which is capable of being triggered so as to engage in the inner teeth (22) of coupling bell (17), whereby toothing (23, 24, 25, 26) of coupling bell (17) and toothed disc (20) are harmonised with each other in such a way that if the coupling bell (17) is at a standstill or is rotating more slowly than the take-off-wheel (13), blocking occurs in the winding direction and if the coupling bell (17) rotates at a higher speed than the take-off wheel (13), tooth flanks (26) of inner toothing (22) of coupling bell (17) push the toothed disc (20) out of engagement with the allocated tooth flanks (25).

3. Belt roller according to claim 2, **characterised in that** the toothed disc (20) is arranged in a slidable manner in a recess (19) formed in the take-off wheel (13) between a release position inside the contour of take-off wheel (13) and a blocking position projecting over the circumference of the take-off wheel (13) and which is held in the release position by a friction element (18).

4. Belt roller according to any of claims 1 to 3, **characterised in that** the pretensioning device has an electric motor (11) working in reverse as a drive.

5. Belt roller according to any of claims 1 to 4, **characterised in that** the emergency tensioning device (15) is provided with a pyrotechnic drive.

## Revendications

1. Enrouleur de ceinture (10) autobloquant avec un dispositif de tension d'urgence (15) déclenchable, en particulier lors d'un accident, pour le tambour de la ceinture (14) et avec un deuxième dispositif de prétension (11) fonctionnant de manière réversible, également attaché au tambour de la ceinture (14), un dispositif étant prévu pour achever l'opération de tension activée par le dispositif de prétension (11), lorsque le dispositif de tension d'urgence (15) est déclenché, **caractérisé en ce que** le dispositif de tension d'urgence (15) est réalisé avec une vitesse de rotation plus grande que la vitesse de rotation générée par le dispositif de prétension (11) et **en ce que** l'accouplement (13, 17, 20) entre le dispositif de prétension (11) et le tambour de la ceinture (14) est réalisé de sorte qu'après déclenchement du dispositif de tension d'urgence (15), le tambour de la ceinture (14) mis de ce fait en rotation accélérée ramène l'accouplement (13, 17, 20) dans sa position libérée et supprime ainsi la jonction de l'accouplement entre le tambour de la ceinture (14) et le dispositif de prétension (11).

2. Enrouleur de ceinture selon la revendication 1, **caractérisé en ce que** l'accouplement entre le tambour de la ceinture (14) et le dispositif de prétension (11) comprend une cloche d'accouplement (17) à denture intérieure, reliée fixement au tambour de la ceinture (14) et une roue dentée (20), disposée sur la roue de sortie (13) du dispositif de prétension (11), actionnable pour s'engager dans la denture intérieure (22) de la cloche d'accouplement (17), les dentures (23, 24, 25, 26) de la cloche d'accouplement (17) et de la roue dentée (20) étant adaptées l'une par rapport à l'autre de sorte que lorsque la cloche d'accouplement (17) est à l'arrêt ou en rotation plus lente que la roue de sortie (13), un verrouillage s'effectue dans le sens de l'enroulement et que lorsque la cloche d'accouplement (17) tourne à une vitesse de rotation supérieure à celle de la roue de sortie (13), les flancs des dents (26) de la denture intérieure (22) de la cloche d'accouplement (17) poussent la roue dentée (20) à se désengrener des flancs des dents (25) correspondantes.

3. Enrouleur de ceinture selon la revendication 2, **caractérisé en ce que** la roue dentée (20) est disposée dans un évidement (19) formé dans la roue de sortie (13), de manière mobile entre une position de libération, située à l'intérieur du contour de la roue de sortie (13), et une position de verrouillage, en saillie au-dessous du pourtour de la roue de sortie (13), et est maintenue en position de libération par un élément de friction (18).

4. Enrouleur de ceinture selon l'une quelconque des revendications 1 à 3, **caractérisé en ce que** le dispositif de prétension présente comme entraînement, un moteur électrique (11) à fonctionnement réversible.

5. Enrouleur de ceinture selon l'une quelconque des revendications 1 à 4, **caractérisé en ce que** le dispositif de tension d'urgence (15) est muni d'un entraînement pyrotechnique.
